Europäisches Patentamt

European Patent Office

Office européen des brevets

(11) Publication number: **0 089 837**

A2

# EUROPEAN PATENT APPLICATION

(21) Application number: 83301542.3

(22) Date of filing: 18.03.83

(51) Int. Cl.³: **B 01 D 29/24**
B 01 D 29/38, B 01 D 23/00

(30) Priority: 19.03.82 US 359639

(43) Date of publication of application:
28.09.83 Bulletin 83/39

(84) Designated Contracting States:
DE FR GB IT

(71) Applicant: FOSTER WHEELER ENERGY LIMITED
Foster Wheeler House Station Road
Reading Berkshire, RG1 1LX(GB)

(72) Inventor: Long, William P.
Foster Wheeler Energy Ltd. 110 South Orange Avenue
Livingston New Jersey, 07039(US)

(72) Inventor: De Baise, Robert
Foster Wheeler Energy Ltd. 110 South Orange Avenue
Livingston New Jersey, 07039(US)

(72) Inventor: Bengston, Robert W.
Foster Wheeler Energy Ltd. 110 South Orange Avenue
Livingston New Jersey, 07039(US)

(72) Inventor: Iglesais, Santiago
Foster Wheeler Energy Ltd. 110 South Orange Avenue
Livington New Jersey, 07039(US)

(74) Representative: Bowman, Paul Alan et al,
LLOYD WISE, TREGEAR & CO. Norman House 105-109
Strand
London WC2R OAE(GB)

(54) Coke pad.

(57) A coke pad is disclosed for draining water from coke particles with reduced risk of filter clogging. The pad of this invention comprises an horizontal support surface (12) for supporting a mixture of coke particles and water, and a sump (17) for receiving water draining from the mixture. The sump has a wall (19) defining a plurality of openings (20) and region below the openings in which fine coke particles which are entrained in the draining water accumulate. Filters in the form of coke baskets (22) are slidably received for removal and replacement in channels (24) defined in the openings (20), and spray nozles (30) are provided on the discharge side of the coke baskets (22) for periodic backflushing.

./...

EP 0 089 837 A2

Croydon Printing Company Ltd.

Fig. 2.

## COKE PAD

In the production of coke from the refining of petroleum, the heavy residual bottoms of crude oil are heated and charged directly to the bottom of a large coke drum, where the coking reaction takes place. Coke is deposited in the drum while the lighter products from the reaction are removed overhead to fractionation. Periodically, the hot oil is diverted to a second coke drum and coke is removed from the first drum by hydraulic drilling or cutting. The resultant coke particles, which range in size from microns to several feet in diameter, must then be removed from the cutting water. In one of the methods for accomplishing this removal, the cutting water containing the coke particles is fed from the coke drum to a pad having a large horizontal support surface and an upstanding rim or curb for containing a layer of coke particles in water. Discharge ports are provided in the curb and are packed with sized coke prior to the operation of the pad, thereby acting as filters to allow the cutting water to drain off to an adjacent settling maze while the coke particles are retained. However, fine coke particles from the layer on the pad quickly become lodged in the ports and clog the ports completely, thereby preventing proper draining of water from the pad. Therefore, the discharge ports must be dug out and repacked frequently, resulting in considerable expense and down time of the coke pad.

The drained coke is removed from the pad by vehicles, such as front-end loading vehicles, which feed the coke to railroad cars, trucks or a conveyor.

The poor drainage of such coke pads results in a flooded or only partially drained pad, and thereby necessitates the handling of wet coke, which in turn causes excessive breakdowns of the vehicles which removes the coke particles from the pad. The vehicles typically load the coke particles onto conveyors, trucks, railroad cars or other transport devices. Where conveyors are used, the wet coke causes excessive breakdowns of the conveyors, and where trucks or railroad cars are used, the resulting spillage causes a mess of coke, water and mud in the area adjacent the coke pad where the trucks or railroad cars are loaded.

It is therefore an object of the present invention to provide a system for removing coke particles from cutting water which provides a suitable drainage of water from the particles and eliminates the need for handling wet coke.

It is another object of the invention to provide coke pad filters which minimize clogging and which are easily removable and replaceable.

Toward the fulfillment of these and other objects, the coke pad of the present invention comprises a large horizontal support surface having a curb or upstanding rim for containing a mixture of coke particles in water, and a sump defined in a relatively small region of the pad for providing a depression into which water and fines from the coke particles may flow. Thus, the water and fines from the coke particles freely drain into the sump without passing through filters or any other flow restriction. The sump is formed along the boundary of the pad and includes one wall defining one or more drain openings in which filters defined by porous containers in the form of seeded coke baskets are removably mounted for allowing water to escape while coke fines are retained. Although some of the fines in the sump are entrained in the water flowing through the coke baskets, most of the fines fall to the bottom of the sump, thereby significantly reducing the amount of fines which tend to clog the coke baskets.

The coke baskets contain coke of various graded sizes and are rectangular in shape, having sides which fit into and cooperate with complementary vertical channels provided in the sides of the drain openings, so that the coke baskets may be easily removed and replaced by sliding them with respect to the drain openings. In order to minimize the frequency of coke basket removal, spray nozzles are provided at the discharge side of the baskets for backflushing between draining cycles. The fines which are not filtered from the water by the coke baskets settle out of the water in a settling maze which is provided at the discharge side of the coke baskets.

The above brief description, as well as further objects, features, and advantages of the present invention will be more fully appreciated by reference to the following detailed description of an illustrative embodiment, when taken in connection with the accompanying drawings wherein:-

Figure 1 is a plan view of the coke pad according to the present invention; and

Figure 2 is an enlarged perspective view of a portion of the coke pad.

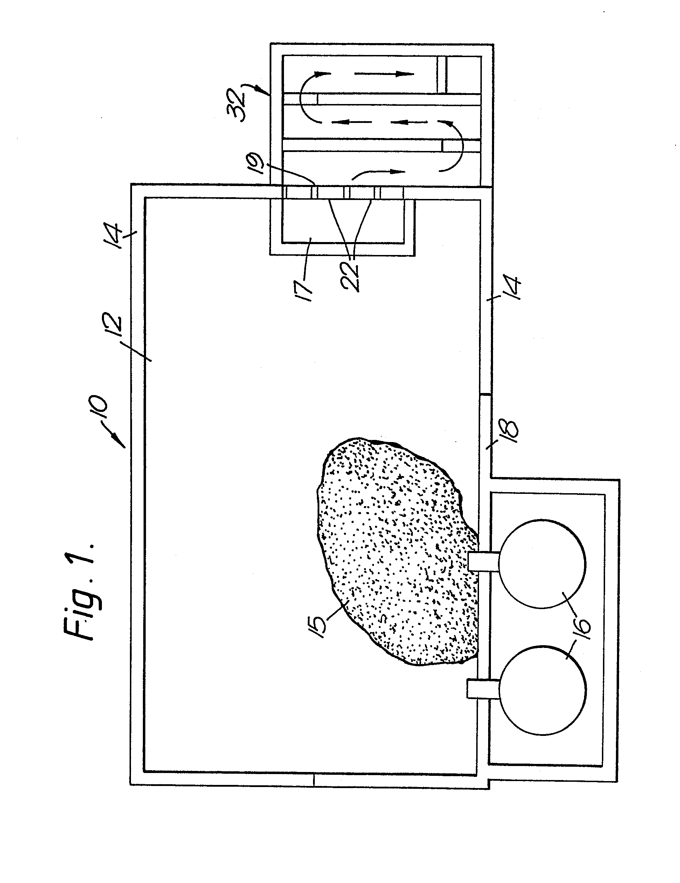

As is illustrated in Figure 1, the coke pad according to the present invention, which is generally designated by the reference numeral 10, includes a large horizontal support surface 12 having a curb or upstanding rim 14 defined at its periphery to retain a mixture of coke particles in water, which spreads out into a layer from a pile 15 of coke particles received from one of a plurality of coke drums 16 positioned adjacent the coke pad 10. In order to prevent spillage or splattering of the coke particles from the pile 15, a portion 18 of the upstanding rim 14 in the region of the coke drums 16 is quite high, often on the order of 30 feet. In order that the water can drain freely from the coke particles, a relatively deep depression is formed in a small portion of the area of the support surface 12 to define a sump 17. The sump 17 can have any suitable shape, although, in the embodiment illustrated, the sump 17 is rectangular.

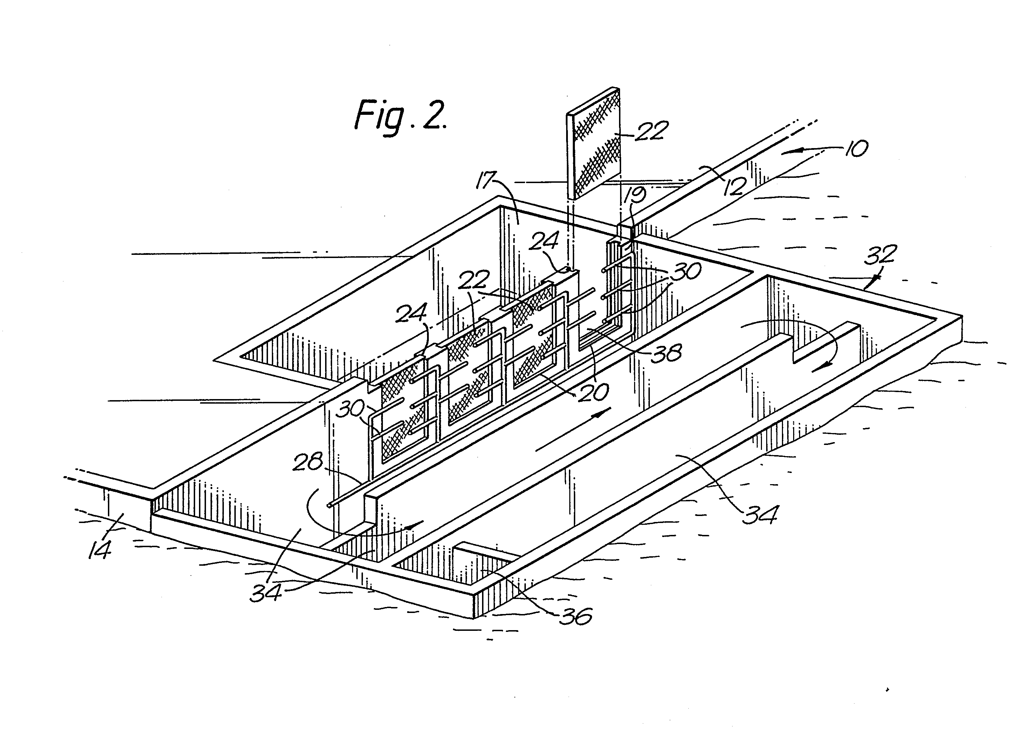

As can best be seen from Figure 2, the sump 17 includes at least one wall 19 which defines one or more discharge openings 20, each of which contains a filter defined by a porous container in the form of a generally rectangular basket 22 containing loose seeded coke particles of various graded sizes. The discharge openings 20 are defined as notches in the wall 19 and the coke baskets 22 are positioned above the level of the bottom of the sump 17. The sides of the discharge openings 20 include vertical channels 24, and the sides of the coke baskets 22 are sized to be complementary to the channels 24 and are received in the channels in sliding engagement, so that the coke baskets 22 are held stationary against the flow of water, and yet can be conveniently slid into and out of the openings 20.

A water pipe 28 having a plurality of spray nozzles 30, such as perforated pipe branches, is provided at the discharge side of the coke baskets 22 to spray water back through the coke baskets as a backflushing operation to clean the coke baskets between coking cycles, thereby minimizing the frequency with which the coke baskets 22 must be removed and replaced.

The water flowing through the coke baskets 22 from the sump 17 discharges to a settling maze 32 adjacent the coke pad 10.  The settling maze 32 comprises a tortuous path defined by a series of flow channels 34 which allow the remaining fine coke particles to settle out of the water as it flows through the flow channels.  The last flow channel 34 terminates in a settling maze sump 36 from which clear water is recirculated to the coking process.

In operation, the pad 10 receives coke particles in the pile 15, which spreads out in a layer over the support surface 12.  Water drains freely from the particles and flows into the sump 17 with some fine coke particles entrained.  The drained coke particles on the pad 10 are then removed by front end loaders which load the coke onto conveyors, trucks, railroad cars or the like.  Most of the fines reaching the sump 17 fall to the bottom and accumulate in a region 38 defined below the level of the coke baskets 22, where they do not block the coke baskets 22.  Thus, the amount of fines which enter the coke baskets 22 is significantly reduced, but some fines are again entrained in the water flowing from the sump 17 through the coke baskets 22 to the settling maze 32.  As the water from the sump 17 escapes through the coke baskets 22 in the discharge openings 20, additional fines are removed.

The small percentage of fines which enter the coke baskets 22 tend to become trapped, thereby clogging the coke baskets and restricting the flow of water.  Therefore, periodically, between draining operations, the spray nozzles are turned on to backflush the coke baskets 22 to remove the clogging coke fines, thereby cleaning the coke baskets 22 for their next use. When the backflushing with the spray nozzles 30 is no longer adequate to clean the coke baskets 22, the coke baskets are slid out of the openings 20 under the cooperation of the sides of the coke baskets and the channels 24, and are replaced by fresh coke baskets.

A mobile solids handling slurry pump (not shown) can be movably mounted over the sump 17 and maze 32 and can be lowered to remove the coke particles which accumulate in the sump 17 and the settling maze 32.

8                                      0089837

What is claimed is:

1.        A coke pad for draining water from coke particles comprising:

a generally horizontal support surface having an upstanding rim for containing a mixture of coke particles and water,

at least one drain opening in said rim, and a filter in said drain opening, said filter being defined by a removable porous container containing coke particles.

2.        The coke pad of Claim 1 wherein the coke particles in the porous container are of various graded sizes.

3.        The coke pad of Claim 1 wherein the drain opening includes vertical channels, and the porous container includes sides which fit within and engage the vertical channels, whereby the porous container may be slid  into and out of the drain opening.

4.        A coke pad for draining water from coke particles comprising:-

a generally horizontal support surface having an upstanding rim for containing a mixture of coke particles and water,

a sump defined in a portion of the support surface to receive water and entrained fine coke particles draining from the mixture, said sump having a wall including at least one drain opening, and

a filter, defined by a porous container containing coke particles, positioned in said at least one drain opening, whereby the draining water flows into the sump before flowing through the filter, and a significant portion of the fine coke particles which are entrained in the draining water fall out in the sump.

5. The coke pad of Claim 4, wherein at least one drain opening is positioned at a level above the bottom of the sump to provide a region for coke particles to accumulate without blocking the filter.

6. The coke pad of Claim 1 or 4, further comprising means for backflushing the filter to remove any particles which may be clogging the filter.

7. The coke pad of Claim 6 wherein the backflushing means comprise spray nozzles provided at the discharge side of the filter.

8. The coke pad of Claim 4 wherein the filter is removable.

9. The coke pad of Claim 4 wherein the drain opening includes vertical channels, and the filter has sides which fit within and engage the vertical channels, whereby the filter may be slid into and out of the drain opening.

10.      The coke pad of Claim 1 in which sump means is provided for obtaining a hydrostatic head and settling.

Fig. 1.

Fig. 2.

0089837